# EUROPÄISCHE PATENTANMELDUNG

(11) **EP 0 917 937 A2**
(43) Veröffentlichungstag der Anmeldung: **26.05.1999**
(21) Anmeldenummer: 98122201.1
(22) Anmeldetag: 23.11.1998
(51) Int. Cl.: B27G 19/02

(54) **Kreissäge zum Kappen von Latten**

(30) Priorität: 23.11.1997 DE 19751795
(71) Anmelder: Fellner, Franz, 92242 Hirschau (DE)
(72) Erfinder: Fellner, Franz, 92242 Hirschau (DE)
(74) Vertreter: Vogl, Leo, Dipl.-Ing.

(57) **Zusammenfassung**

Bei einer zum kappen von Latten (1) ausgebildeten Kreissäge ist das Sägeblatt (3) innerhalb eines Abdeckschutzes (6) schwenkbar oder verschiebbar angeordnet. Unterhalb des Abdeckschutzes (6) sind an diesen anschließende auf eine Fläche aufsetzbare Schutzkappen (7) angeordnet, die die zu kappende Latte (1) derart einschließen, daß die Schutzkappen (7) beidseitig der zu kappenden Latte (1) liegen. Die Schutzkappen (7) sind in ihrem Abstand verstellbar. Ferner sind verstellbare Führungsrollen (12) vorgesehen, die die Auflage (2) der kappenden Latte (1) umschließen.

## Beschreibung

Die Erfindung betrifft eine Kreissäge zum Kappen von Latten nach dem Oberbegriff des Anspruches 1.

Latten werden als Unterkonstruktion für Dacheindeckungen, Fassaden- und Deckenverkleidungen und dergleichen verwendet. Die Latten sind in der Regel 3 - 6 Meter lang, größere Längen werden durch Aneinanderstoßen mehrerer Latten erreicht. Dieser Stoß erfolgt auf einer Grundlattung auf der die Latten aufgenagelt werden. Der Lattenstoß erfolgt in der Mitte ihrem Auflagers, damit jedes Lattenende der aneinander stoßenden Latten ein möglichst großes Auflager hat und der Lattenstoß möglichst in der Mitte des Auflagers liegt.

Die bisherigen Verfahrensanweisungen zum Anbringen von Latten sind folgende:

Die aufzubringende Latte wird an die senkrecht zur Latte verlaufende Unterkonstruktion gehalten, angezeichnet, abgenommen abgesägt, wieder aufgelegt und auf der Unterkonstruktion befestigt. Dies ist genau, aber sehr arbeitsaufwendig.

Die andere Verfahrensweise beinhaltet die Aufbringung einer Latte auf die Unterkonstruktion und abkappen der Latte mittig zur Auflage mit einer Handkreis- oder Kettensäge. Dieses Verfahren ist schneller, weist aber folgende Nachteile auf:

Kettensägen erzeugen einen groben Schnitt. Der Hebelarm von der Schnittstelle bis zu den Handgriffen ist lang. Die Säge muß zweihändig frei geführt werden. Die Kettenglieder greifen stoßweise an, dabei beginnt die Kettenführung zu hüpfen. Dieses Hüpfen verstärkt sich, wenn die Kette stumpf wird. Ein genaues Sägen ist nicht möglich, so daß die Gefahr besteht, daß sich die Latte vom Stoß bis zum Befestigungsnagel aufspaltet. Die Sägespäne werden frei ausgeworfen, so daß sie zur Traufe rutschen und das Lüftungsgitter verstopfen können.

Handkreissägen erzeugen im Gegensatz dazu einen feinen Schnitt, sind aber insbesondere zum Teilen von Brettern, Platten, Kanthölzern oder dergleichen gebaut. Sie haben verschiedene Konstruktionsteile, die für das Kappen von Latten nicht benötigt werden und teilweise sogar hinderlich sind. Die Grundplattenauflage ist für die kurze Schnittstelle bei der Kappung der Latten zu groß. Die Schnittstelle wird dadurch fast verdeckt. Der Schnittanzeiger kann nicht benutzt werden, da er weit vor der Schnittstelle liegt. Der Spaltkeil ist hinderlich, er kommt erst nach dem Kappschnitt in die Schnittstelle.

Aus der DE 195 08 044 A 1 ist eine Kreissäge-Einheit bekannt, bei der die Einheit Motor Sägeblatt Abdeckschutz schwenkbar an einem gleitbaren Halter gelagert ist. Bei dieser Ausführung muß der schwenkbare Abdeckschutz bei Aufsetzen des Sägeblattes hochgezogen werden. Das Sägeblatt wird dadurch zum Teil frei und beim Aufsetzen auf die zu kappende Latte kann es zum Rückschlag kommen. Der Späneauswurf ist wie bei einer Kettensäge, Nachteilig ist ferner, daß die Schnittstelle nur schräg eingesehen werden kann und das Aufsetzen des Sägeblattes auf die zu kappende Latte nicht fixiert ist.

Weiterhin ist eins der DE 38 06 813 A 1 eine gattungsgleiche Kreissäge bekannt. Bei dieser Kreissäge ist das Antriebsgehäuse mit antreibbarem Sägering schwenkbar an einer Grundplatte gelagert. Aufgabe dieser Vorrichtung ist es, Zahnkranz und Sägering vollständig abzudecken.

Im Gegensatz dazu ist es Aufgabe der Erfindung, eine Kreissäge mit hoher Bedienersicherheit zu schaffen, die leichtes und schnelles Abkappen von schmalen Latten bei hoher Genauigkeit ermöglicht.

Gemäß der Erfindung wird dies durch die im Anspruch 1 angegebenen Merkmale erreicht.

Die erfindungsgemäße Ausbildung der Kreissäge weist folgende Vorteile auf: Das Kreissägeblatt ist in Ruhestellung vollkommen abgedeckt. In dieser Ruhestellung ist das Kreissägeblatt so eingebaut, daß es zum Sägen herausschwenkbar oder herausschiebbar ist. Die an der unten offenen Seite der Abdeckung angebrachten Schutzkappen decken das ausgefahrene Sägeblatt volkommen ab. Durch die Schutzkappen wird die zu kappende Latte eingeschlossen, so daß ein gefährlicher Rückschlag vermieden ist.

Die Ünteransprüche kennzeichnen Weiterbildung der Erfindung, die folgende Vorteile aufweisen:

Durch die Einrichtung zur Erstellung des Abstandes der Schutzkappen ist das Abkappen verschiedener Lattenbereiche möglich Die Kreissäge kann dadurch an der Latte festgeklemmt werden.

Durch die Anordnung von Führungsrollen an den Schutzkappen ist das sichere Aufsetzen der Kreissäge auf die Unterkonstruktion gewährleistet. Außerdem kann durch das Verstellen der Führungsrollen die Schnittstelle eingestellt werden.

Die Anordnung eines Sichtfensters ermöglicht eine Beobachtung der Schnittstelle.

Die Ausbildung der Verlängerung des Abdeckschutzes als Hohlraum gewährleistet ein Auffangen der Sägespäne.

In der nachfolgenden Beschreibung und den beiliegenden Zeichnungen ist ein Ausführungsbeispiel erläutert.

In der Zeichnung zeigt:
- Fig. 1: einen Schnitt nach der Linie I - I der Fig. 2,
- Fig. 2: einen Schnitt nach der Linie II - II der Fig. 1,
- Fig. 3a: die Kreissäge von vorne mit den Führungsrollen nach der Linie III - III der Fig. 4,
- Fig. 3b: den unteren Teil der Kreissäge mit den Führungsrollen beim Aufsetzen auf die Auflage und
- Fig. 4: eine Seitenansicht der Kreissäge nach der Linie IV - IV der Fig. 3a.

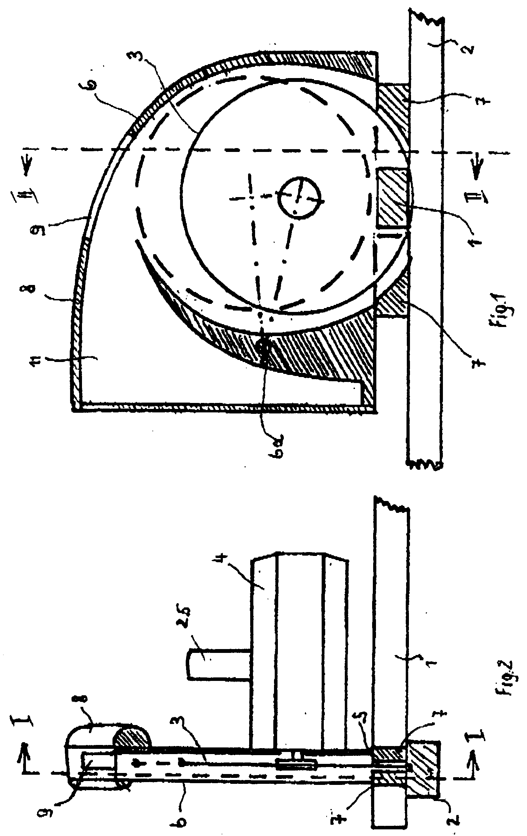

In der Zeichnung ist mit 1 die zu kappende Latte bezeichnet und mit 2 die Auflage für die zu kappende Latte 1. Das Sageblatt 3 mit dem Motor 4 ist in Fig. 1 und 2 abgesenkt in der Schnittstelle 5 nach vollzogenen Schnitt dargestellt. Die gestrichelte Darstellung zeigt die Ausgangsstellung vor dem Schnitt. Das Sägeblatt 3 ist in dem Abdeckschutz 6 und der Verlängerung 8 schwenkbar an der Achse 6a gelagert. Vor und hinter der Schnittstelle 5 sind Schutzkappen 7 angeordnet, die mit dem Abdeckschutz 6 über die Lager 23 mit einer drehbaren Führungsstange 21 verbunden sind.

Die Führungsstange 21 weist in einem Teil ein Rechts- und im anderen Teil ein Linksgewinde auf Diese Gewinde sind in mit Gewinde versehenen Hülsen 21a geführt, die uber Laschen 21b mit den Schutzkappen 7 verbunden sind. Die Drehung der Führungsstange 21 erfolgt über den Griff 21c.

Auf der gegenüberliegenden Seite des Abdeckschutzes 6 ist eine Führungsstange 22 ohne Gewinde angeordnet, die in identischen Hülsen 21a ohne Gewinde über Laschen 21b an Schutzkappen 7 befestigt ist.

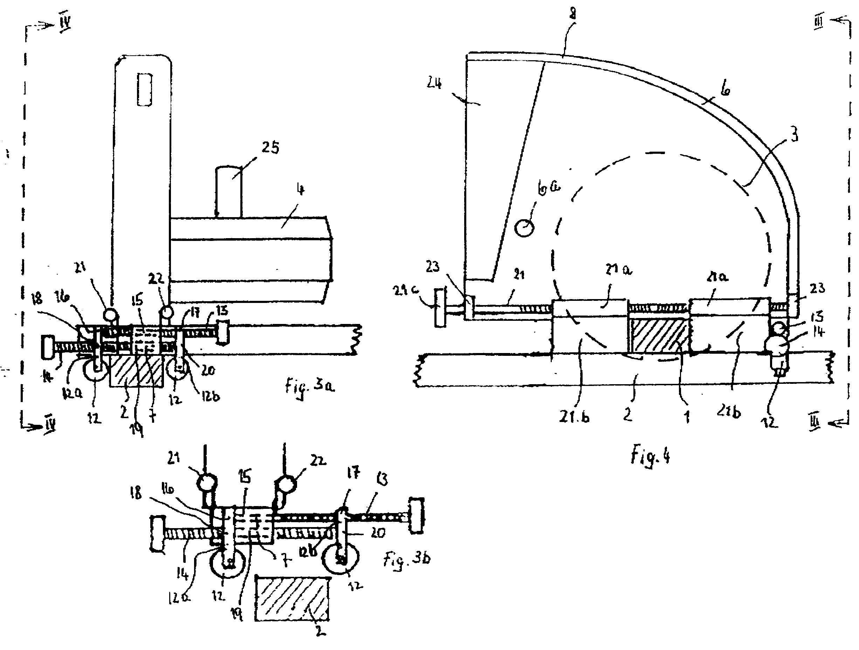

Fig. 3 zeigt Führungsrollen 12, die an der vorderen Schutzkappe 7 angeordnet sind. Die beiden Führungsrollen 12 sind durch Gewindestangen 13 und 14 verbunden. Die Führungsrollen 12 weisen laschenförmige Halterungen 12a, 12b auf die die Lagerungen für die Gewindestangen 13 und 14 tragen. Die Gewindestangen 13 und 14 sind in folgender Weise in den Lagenrungen geführt:

Die Gewindestange 13 ist an der Schutzkappe 7 in einer Hülse 15 mit einem Innengewinde gelagert. Die Lagerstelle 16 der Gewindestange 13 ist drehbar, aber unverschiebbar in der laschenförmigen Lagerung 12a gelagert. Die Lagerstelle 17 ist drehbar und verschiebbar in der laschenförmigen Halterung 12b gelagert.
Die Gewindestange 14 ist im Lager 19 an der Schutzkappe 7 drehbar und verschiebbar gelagert. Die Lagerstelle 20 der Gewindestange 14 an der laschenförmigen Halterung 12b ist drehbbar, aber nicht verschiebbar, während die Lagerstelle 18 an der laschenförmigen Halterung ein Innengewinde aufweist, in dem die Gewindestange 14 geführt ist.

An dem Abdeckschutz 6 ist eine Verlängerung 8 angeordnet, die als Hohlraum 11 zur Aufnahme der Sägespäne ausgebildet ist. Die Späne können durch die Klappe 24 entleert werden.

Ferner kann die Verlängerung 8 als Handgriff ausgebildet sein.

Die Handhabung der Kreissäge erfolgt in nachfolgender Weise:

Die Kreissäge wird mit den Schutzkappen 7 und Führungsrollen 12 auf die zu kappende Latte 1 und die Auflage 2 geschoben. Mit der Führungsstange 21 kann Abstand zwischen den Schutzkappen 7 verändert und damit die Kreissäge an der Latte 1 festgeklemmt werden. Die Verstellung der Führungsrollen 12, die die Breite der Auflage 2 übergreifen erfolgt durch die Gewindestangen 13 und 14.

Beim Drehen der Gewindestange 13 werden die Führungsrollen 12 unter den Schutzkappen 7 verschoben, ohne den Abstand der Führungsrollen 12 zueinander zu ändern. Der Bewegungsantrieb der Verschiebung erfolgt in der mit Innengewinde versehenen Hülse 15 an der Schutzkappe 7.

Die Verstellung des Abstandes zwischen den Führungsrollen 12 erfolgt durch die Gewindestange 14 Die Verschiebung wird durch das Innengewinde der Lagerstelle 18 an der laschenförmigen Halterung 12a bewirkt.

Zum Kappen der Latte 1 wird der Motor 4 mit dem Handgriff 25 nach unten gezogen. Das Sägeblatt 3 wird gegen die Schnittstelle 5 bewegt. Während des gesamten Sägevorganges wird das Sägeblatt 3 vom Abdeckschutz 6 und den Schutzkappen 7 voll umschlossen Durch die Schutzkappen 7 ist die Kreissage an der Latte 1 lestgeklemmt und durch die Führungsrollen 12 an der Auflage 2 der Unterkonstruktion geführt. Ein gefährlicher Rückschlag ist damit vermieden und ein genauer Schnitt gewährleistet.

## Patentansprüche

1. Kreissäge zum Kapppen von Latten, mit einem das Sägeblatt umschließenden Abdeckschutz und einer schwenkbaren,aus Motor und Sägeblatt bestehenden Einheit, wobei das Sägeblatt schwenkbar oder verschiebbar im Abdeckschutzgelagert ist.
dadurch gekennzeichnet,
daß unterhalb des Abdeckschutzes (6) an diesen anschließende, auf eine Fläche aufsetzbare Schutzkappen (7) angeordnet sind, die die zu kappende Latte (1) derart einschließen, daß die Schutzkappen (7) beidseitig der zu kappenden Latte (1) liegen.

2. Kreissäge nach Anspruch 1,
dadurch gekennzeichnet,
daß die Schutzkappen (7) über eine Führungsstange (21) in Lagern (23) des Abdeckschutz (6) derart gelagert sind, daß die Schutzkappen (7) aufeinander zu oder von einander wegbewegt werden konnen.

3. Kreissäge nach Anspruch 2,
dadurch gekennzeichnet,
daß die Führungsstange (21) ein Links- und Rechtsgewinde aufweist und den Schutzkappen (7) entsprechendende Rechts- oder Linksinnengewinde über Hülsen (21a) zugeordnet sind.

4. Kreissäge nach Anspruch 2 oder 3,
dadurch gekennzeichnet,
daß an der gegenüberliegenden Seite des Abdeckschutzes (6) in Hülsen (21a) eine weitere Führungsstange (21) ohne Gewinde angeordnet ist.

5. Kreissäge nach Anspruche 1 oder den folgenden,
dadurch gekennzeichnet,
daß an mindestens einer Schutzkappe (7) Führungsrollen (12) angeordnet sind, die die Auflage (2) der zu kappenden Latte (1) umschließen.

6. Kreissäge nach Anspruch 5,
dadurch gekennzeichnet,
daß an beiden Schutzkappen (7) Führungsrollen (12) angeordnet sind.

7. Kreissäge nach Anspruch 5 oder 6,
dadurch gekennzeichnet,
daß die Führungsrollen (12) durch eine Gewindestangen (13) verbunden sind und daß die Gewindestange (13) in einer Hülse (15) mit Innengewinde an der Schutzkappe (7) und ferner in einer Lagerstelle (16) drehbar, aber unverschiebbar in einer laschenförmigen Halterung (12a) der einen Führungsrolle (12) und weiterhin in einer Lagerstelle (17) drehbar und verschiebbar in der laschenförmigen Halterung (12b) der zweiten Führungsrolle (12) gelagert ist.

8. Kreissäge nach Anspruch 5 oder folgenden,
dadurch gekennzeichnet,
daß die Führungsrollen (12) durch eine Gewindestange (14) verbunden sind und daß die Gewindestange (14) in einem Lager (19) an der Schutzkappe (7) drehbar und verschliebbar gelagert ist und eine Lagerstelle der Gewindstange (14) an der laschenförmigen Halterung (12b) drehbar, aber nicht verschiebbar geführt ist und in einer weiteren Lagerstelle (18) an der laschenförmigen Halterung (12a) in einem Innengewinde drehbar gelagert ist

9. Kreissäge nach Anspruch 1 oder folgenden,
dadurch gekennzeichnet,
daß sich an den Abdeckschutz (6) eine Verlängerung (8) anschließt, die als Handgriff ausgebildet ist.

10. Kreissäge nach Anspruch 9,
dadurch gekennzeichnet,
daß die Verlangerung (8) des Abdeckschutzes (6) als Hohlraum (11) zur Aufnahme der Sägespäne ausgebildet ist.

11. Kreissäge nach Anspruch 10,
dadurch gekennzeichnet,
daß der Hohlraum (11) mit einer Klappe (24) versehen ist.

12. Kreissäge nach Anspruch 1 oder den folgenden,
dadurch gekennzeichnet,
daß ein Fenster (9) im Abdeckschutz (6) derart angeordnet ist, daß die Schnittstelle (5) des Sägeblattes (3) einsehbar ist.
